# FASCICULE DE BREVET EUROPEEN

(11) **EP 3 379 661 B1**
(45) Date de publication et mention de la délivrance du brevet: **30.10.2019**
(21) Numéro de dépôt: 18163240.7
(22) Date de dépôt: 22.03.2018
(51) Int. Cl.: H01S 3/08, H01S 3/04, H01S 3/042, H01S 3/06, H01S 3/23, H01S 3/16, H01S 3/13, H01S 3/131, H01S 3/0941

(54) **DISPOSITIF D'AMPLIFICATION LASER À CONTRÔLE ACTIF DE LA QUALITÉ DE FAISCEAU ET BARRES D'EXTRÉMITÉ**
LASERVERSTÄRKUNGSVORRICHTUNG MIT AKTIVER KONTROLLE DER QUALITÄT DES LASERSTRAHLS UND ENDSCHIENEN
LASER AMPLIFICATION DEVICE WITH ACTIVE CONTROL OF BEAM QUALITY AND END BARS

(30) Priorité: 24.03.2017 FR 1752479
(43) Date de publication de la demande: 26.09.2018
(73) Titulaire: Commissariat à l'énergie atomique et aux énergies alternatives, 75015 Paris (FR); Centre Technologique Alphanov, 33400 Talence (FR)
(72) Inventeur: JOLLY, Alain, 33510 ANDERNOS (FR)
(74) Mandataire: Brevalex

(56) Documents cités:
- EP-A1- 2 312 706
- US-A- 5 181 215
- US-A1- 2006 109 878
- ZHANG YUQI ET AL: "Research and control of thermal effect in a helium gas-cooled multislab Nd:glass laser amplifier", VISUAL COMMUNICATIONS AND IMAGE PROCESSING; 20-1-2004 - 20-1-2004; SAN JOSE,, vol. 9621, 5 août 2015 (2015-08-05), pages 962103-962103, XP060056750, DOI: 10.1117/12.2192667 ISBN: 978-1-62841-730-2
- J. LUTTMANN ET AL.: "Very high-efficiency frequency-tripled ND:YAG MOPA for spaceborne lidar", PROCEEDINGS OF SPIE, vol. 6871, 13 mars 2008 (2008-03-13), XP040433376, DOI: 10.1117/12.763640

## Description

### DOMAINE TECHNIQUE

L'invention concerne le domaine des dispositifs d'amplification laser, comprenant un milieu amplificateur configuré pour amplifier un faisceau laser incident, lorsqu'il est pompé optiquement par une ou plusieurs diodes laser ou empilements de diodes laser.

Dans tout le texte, le faisceau laser avant amplification est nommé faisceau laser à amplifier, et le faisceau après amplification est nommé faisceau laser amplifié.

L'invention concerne plus particulièrement un dispositif d'amplification laser offrant un contrôle actif de la qualité de faisceau, c'est-à-dire présentant des moyens actifs pour éviter de dégrader la qualité optique du faisceau laser amplifié.

Ces moyens sont dits actifs, car peuvent être actionnés ou éteints.

L'invention concerne plus particulièrement un dispositif d'amplification laser, dans lequel le milieu amplificateur se présente sous la forme d'une plaque plus ou moins épaisse (ou « *slab* », en anglais), dite plaque amplificatrice.

### ÉTAT DE LA TECHNIQUE ANTÉRIEURE

Dans un tel dispositif, la puissance du faisceau des diodes de pompage doit être confinée à l'intérieur de la plaque amplificatrice.

Dans le cas de milieux amplificateurs dits « à trois niveaux», cette intensité peut devoir être rendue supérieure à un seuil prédéterminé, dit seuil de transparence, de sorte que la puissance de pompage doit être très fortement confinée dans un petit volume.

Dans le cas des autres milieux amplificateurs, ne présentant pas de seuil (dits « à quatre niveaux »), le besoin de confinement est moindre, mais demeure.

Une conséquence directe de la forte densité de puissance de pompage dans la plaque est un échauffement, potentiellement très significatif.

Cet échauffement provoque l'apparition de gradients de température, qui se développent à l'intérieur de la plaque amplificatrice.

Ces gradients de température se traduisent tout d'abord par une répartition non homogène des valeurs d'indice optique de la plaque amplificatrice, ce qui nuit à la qualité optique du faisceau laser amplifié.

Cette première conséquence de l'échauffement est nommée effet thermo-optique.

Cet échauffement provoque également l'apparition de déformations mécaniques au niveau des faces de la plaque amplificatrice, contribuant également à dégrader la surface d'onde du faisceau laser amplifié. Cette seconde conséquence de réchauffement est nommée effet thermo-mécanique.

On connaît dans l'art antérieur des dispositifs d'amplification laser comprenant des moyens de refroidissement, pour limiter réchauffement à l'intérieur de la plaque amplificatrice, et donc les conséquences de cet échauffement sur la qualité optique du faisceau laser amplifié.

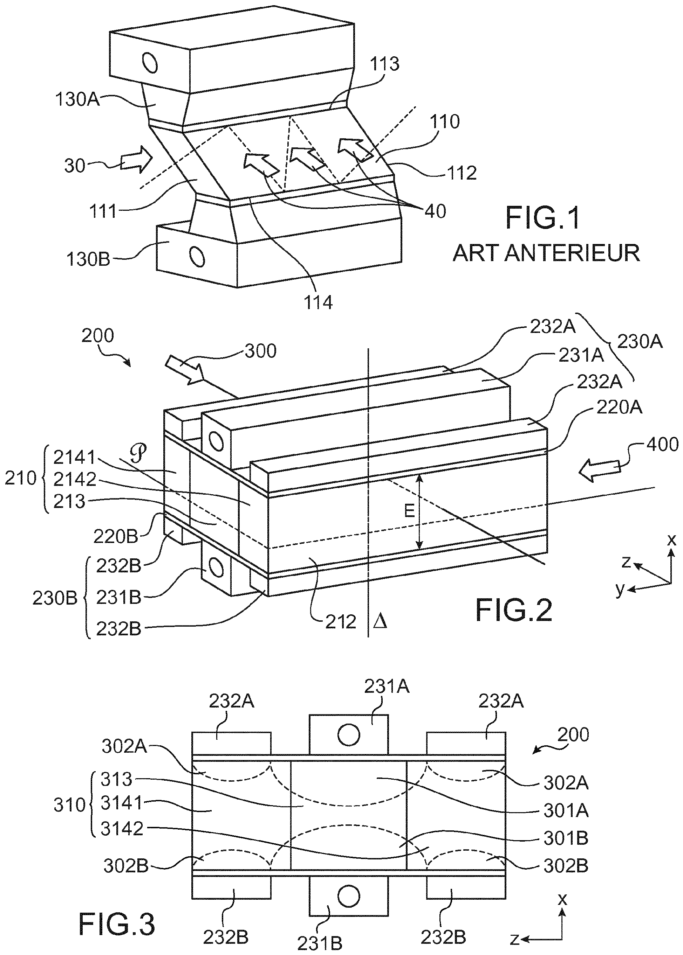

La figure 1 illustre un tel dispositif, comprenant une plaque amplificatrice 110 dans laquelle un faisceau laser à amplifier se propage en zigzag, par réflexions successives sur une face supérieure 113 et une face inférieure 114 de la plaque amplificatrice.

La plaque amplificatrice 110 est pompée ici de façon transverse, par des faisceaux de pompe 40 injectés dans la plaque amplificatrice.

La plaque amplificatrice 110 est refroidie au niveau de ses faces supérieure et inférieure, grâce à des éléments de refroidissement respectifs 130A, 130B.

Chaque élément de refroidissement 130A, 130B est constitué d'un bloc métallique, au sein duquel circule un liquide de refroidissement tel que de l'eau, généralement à température ambiante (environ 300 K).

Ces éléments de refroidissement améliorent la qualité optique du faisceau laser amplifié, en réduisant la température moyenne dans la plaque amplificatrice.

La demande de brevet FR 1652393 (FR3049122) décrit une solution astucieuse, dans laquelle les faces supérieure et inférieure de la plaque amplificatrice sont recouvertes non seulement par des éléments de refroidissement, mais également par des éléments de chauffage. Il est ainsi possible d'ajuster avec précision une répartition de températures de la plaque
amplificatrice. De façon surprenante, on arrive ainsi à limiter encore une déformation de surface d'onde d'un faisceau laser à amplifier, traversant alors la plaque amplificatrice selon un chemin optique en ligne droite.

EP 2312706 A1 décrit un dispositif laser selon le préambule de la revendication 1.

Un objectif de la présente invention est d'améliorer encore les solutions existantes.

### EXPOSÉ DE L'INVENTION

Cet objectif est atteint avec un dispositif d'amplification laser, qui comprend :
- un élément d'amplification, constitué d'une plaque amplificatrice dopée et de deux barres d'extrémité non dopées, les barres d'extrémité encadrant latéralement la plaque amplificatrice, et chaque barre d'extrémité présentant une face, située du côté opposé à la plaque amplificatrice, qui forme une face d'entrée, respectivement une face de sortie de l'élément d'amplification pour un faisceau laser à amplifier; et
- deux systèmes de contrôle de la température, recouvrant respectivement une face supérieure et une face inférieure de l'élément d'amplification, la face supérieure, respectivement inférieure, de l'élément d'amplification étant constituée par les faces supérieures, respectivement inférieures, de la plaque amplificatrice et des deux barres d'extrémité.

Selon l'invention :
- chaque système de contrôle de la température comprend un élément de refroidissement, recouvrant une région centrale de la face supérieure, respectivement inférieure de l'élément d'amplification, et au moins un élément de chauffage, recouvrant des régions périphériques de la face supérieure, respectivement inférieure de l'élément d'amplification ; et
- les systèmes de contrôle de la température sont sensiblement symétriques l'un de l'autre, selon une symétrie orthogonale par rapport à un plan 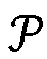 , ledit plan 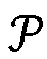 étant un plan parallèle aux faces supérieure et inférieure de la plaque amplificatrice et passant par ladite plaque.

Sensiblement symétrique signifie que chaque système de contrôle de la température présente un taux de recouvrement supérieur à 90% avec le symétrique de l'autre système de contrôle de la température, voire supérieur à 95% ou même 98%.

Le document « Analytical and Experimental Studies on the Characteristics of Composite Solid-State Laser Rods in Diode-End-Pumped Geometry », Masaki Tsunekane et al., IEEE Journal of selected topics in quantum electronics, Vol. 3, No. 1, Février 1997, enseigne de réaliser un barreau laser composite, avec un cristal YVO₄ dopé Nd (néodyme), formant le milieu amplificateur, auquel est accolé un cristal YVO₄ non dopé. Le pompage est longitudinal. L'ajout du cristal YVO₄ non dopé permet notamment de réduire les contraintes thermiques s'exerçant sur le milieu amplificateur.

Ici, l'invention propose d'accoler une barre respective, non dopée, dite barre d'extrémité, de chaque côté d'une plaque amplificatrice.

Les inventeurs ont montré que l'on obtient ainsi une réduction des contraintes thermiques s'exerçant dans la plaque amplificatrice, et ce même avec un pompage transverse de la plaque amplificatrice. En particulier, les barres d'extrémité permettent de réduire une déformation thermo-mécanique des faces d'entrée et sortie de l'élément d'amplification.

Une première réduction de contraintes thermiques est liée, donc, à la simple présence des barres d'extrémité de part et d'autre de la plaque amplificatrice. Ces barres d'extrémité permettent une meilleure homogénéisation de la température dans la plaque amplificatrice.

En outre, l'invention propose ici d'utiliser un système de contrôle de la température, tel que décrit dans la demande de brevet FR 1652393 citée en introduction, en le disposant non pas au-dessus et en-dessus de la plaque amplificatrice seule, mais au-dessus et en-dessus de l'élément d'amplification constitué de la plaque amplificatrice et des deux barres d'extrémité.

Ainsi, les éléments de refroidissement peuvent couvrir une large étendue des faces supérieure et inférieure de la plaque amplificatrice, sans que cela empêche la présence des éléments de chauffage. En particulier, les éléments de refroidissement peuvent recouvrir de 60% à 100% de la surface des faces supérieure et inférieure de la plaque amplificatrice, par exemple au moins 70%.

L'invention permet donc de réduire une température moyenne de l'élément d'amplification, et en particulier une température moyenne de la plaque amplificatrice, tout en conservant les effets positifs liés aux éléments de chauffage.

Une température maximale dans la plaque amplificatrice est par exemple réduite d'au moins 30 K, en comparaison avec les valeurs atteignables sans les barres d'extrémité. Le gain du milieu actif ainsi que l'intégrité de la plaque amplificatrice sont ainsi préservés au mieux.

Les éléments de chauffage permettent d'agir localement sur une répartition de températures dans un milieu traversé par le faisceau laser, de façon à combattre les effets néfastes des gradients naturels de température dus au refroidissement, nécessaire, de la plaque amplificatrice.

Les barres d'extrémité offrent un volume supplémentaire dans lequel les éléments de chauffage peuvent agir. Les éléments de chauffage peuvent ainsi présenter de grandes dimensions relativement à celles de la plaque amplificatrice, sans que cela n'empêche le refroidissement nécessaire de la plaque. On augmente ainsi une longueur d'un chemin optique selon lequel le faisceau laser est soumis à des gradients de température permettant, par effet thermo-optique, de combattre les effets néfastes des gradients naturels de température dus au refroidissement la plaque amplificatrice. Cela permet de limiter encore une dégradation de la qualité de surface d'onde d'un faisceau laser à amplifier se propageant en ligne droite en passant par la plaque amplificatrice.

La surface réservée aux éléments de chauffage étant augmentée, grâce aux barres d'extrémité, ces derniers peuvent présenter des formes et dimensions d'autant plus variées, adaptées aux conditions de fonctionnement du dispositif d'amplification laser selon l'invention.

En tout état de cause, de manière avantageuse, les systèmes de contrôle de la température selon l'invention ne recouvrent pas, même partiellement, des faces latérales (faces d'entrée et sortie) ni des faces transverses de l'élément d'amplification.

L'invention permet de limiter la focale d'une ou plusieurs lentille(s) de pré-compensation destinée(s) à corriger une déformation résiduelle subsistant malgré les barres d'extrémité et les systèmes de contrôle de la température. Elle permet dans certains cas de s'affranchir totalement d'une telle lentille.

Les barres d'extrémité permettent de réduire une déformation thermo-mécanique des faces d'entrée et sortie de l'élément d'amplification, de sorte que la contribution relative de l'effet thermo-optique est augmentée. Cet effet thermo-optique étant corrigé grâce aux systèmes de contrôle de la température, une déformation résiduelle du faisceau laser est alors particulièrement réduite. Les barres d'extrémité permettent par exemple de réduire d'un facteur 10 la contribution relative de l'effet thermo-mécanique sur la déformation de surface d'onde d'un faisceau laser traversant l'élément d'amplification depuis sa face d'entrée jusqu'à sa face de sortie.

Les systèmes de contrôle de la température permettent notamment de moduler les répartitions des températures locales à l'intérieur de l'élément d'amplification, et donc les indices optiques locaux à l'intérieur de l'élément d'amplification, de sorte que chaque point de la surface d'onde d'un faisceau laser à amplifier ait parcouru sensiblement la même valeur de chemin optique, après une ou plusieurs traversée(s) en ligne droite à l'intérieur de l'élément d'amplification et en passant par la plaque amplificatrice.

Le faisceau après la ou les traversée(s) en ligne droite à l'intérieur de l'élément d'amplification, en passant par la plaque amplificatrice, forme le faisceau laser amplifié.

La différence de chemin optique entre deux points de la surface d'onde du faisceau laser amplifié peut être sensiblement nulle, inférieure à un dixième de la longueur d'onde dudit faisceau laser.

En variante, on peut moduler les répartitions des températures locales à l'intérieur de l'élément d'amplification, et donc les indices optiques locaux à l'intérieur de l'élément d'amplification, de sorte que chaque point de la surface d'onde d'un faisceau laser ait parcouru, après une ou plusieurs traversée(s) en ligne droite à l'intérieur de l'élément d'amplification en passant par la plaque amplificatrice, une valeur maîtrisée de chemin optique. Les valeurs de chemin optique associées à chaque point de la surface d'onde du faisceau laser amplifié correspondent ensemble à une déformation connue de cette surface d'onde, en particulier une déformation sensiblement cylindrique ou sphérique.

La différence de chemin optique entre deux points de la surface d'onde du faisceau laser amplifié correspond alors à une surface sensiblement sphérique, respectivement cylindrique, comprise entre deux surfaces sphériques, respectivement cylindriques dont les rayons diffèrent de moins d'un dixième de la longueur d'onde dudit faisceau laser.

En variante, la déformation est une déformation asphérique, correspondant sensiblement à deux déformations cylindriques selon des axes orthogonaux.

La différence de chemin optique entre deux points de la surface d'onde du faisceau laser amplifié correspond alors à une surface asphérique, comprise entre deux surfaces asphériques définies chacune par deux cylindres d'axe orthogonaux, les rayons des cylindres différant deux à deux de moins d'un dixième de la longueur d'onde dudit faisceau laser.

L'invention offre donc un moyen pour moduler des gradients de température de telle sorte que la traversée de la plaque amplificatrice par le faisceau à amplifier soit possible avec une déformation minimale de la surface d'onde incidente, les gradients de température étant ici modulés sur un volume supérieur à celui de la plaque amplificatrice seule.

Dans chaque système de contrôle de la température, l'au moins un élément de chauffage s'étend avantageusement au moins le long de deux bords opposés de la face supérieure, respectivement inférieure, de l'élément d'amplification, ces bords opposés étant situés pour l'un du côté de la face latérale d'entrée et pour l'autre du côté de la face latérale de sortie de l'élément d'amplification. Chaque élément de chauffage recouvre au moins une partie d'une barre d'extrémité de l'élément d'amplification.

Les barres d'extrémité sont avantageusement constituées chacune du même matériau que la plaque amplificatrice, excepté que ce matériau est non dopé dans les barres d'extrémité.

De préférence, chaque système de contrôle de la température est sensiblement invariant par une rotation de 180° autour d'un axe orthogonal à la face supérieure de la plaque amplificatrice, chaque système de contrôle de la température présentant un taux de recouvrement supérieur à 90% avec ce même système de contrôle de la température tourné de 180° autour de cet axe.

L'épaisseur de la plaque amplificatrice peut être supérieure ou égale à 3 mm. Cette épaisseur est avantageusement égale à celle des deux barres d'extrémité.

Dans chaque système de contrôle de la température, l'au moins un élément de chauffage peut présenter des faces orthogonales aux faces supérieure et inférieure de la plaque amplificatrice, situées au regard de l'élément de refroidissement, et de forme arrondie.

Dans chaque système de contrôle de la température, l'au moins un élément de chauffage peut entourer entièrement l'élément de refroidissement.

Dans chaque système de contrôle de la température, l'élément de chauffage peut présenter une section non rectangulaire, dans un plan parallèle à la face supérieure de la plaque amplificatrice.

Avantageusement, le dispositif selon l'invention comprend en outre au moins une lentille externe qui s'étend en entrée, respectivement en sortie de l'élément d'amplification.

En particulier, le dispositif selon l'invention peut comprendre en outre deux lentilles externes plan-cylindre, les axes des cylindres étant orthogonaux entre eux. En particulier, l'axe de cylindre de l'une lentille plan-cylindre peut être parallèle à l'axe (Ox), et l'axe de l'autre lentille plan-cylindre parallèle à l'axe (Oy), où les faces latérales d'entrée et de sortie mentionnées ci-avant s'étendent parallèles au plan (Oxy), en l'absence de déformation thermomécanique.

Une telle lentille externe peut par exemple compenser au moins partiellement l'effet d'une déformation thermomécanique des faces latérales d'entrée et de sortie de l'élément d'amplification incluant la plaque amplificatrice.

De préférence, la face supérieure, respectivement inférieure de l'élément d'amplification, est recouverte directement par une couche dite bas indice, d'indice optique inférieur à l'indice optique moyen de l'élément d'amplification, chaque couche bas indice étant recouverte directement par le système de contrôle de la température correspondant.

Selon un mode de réalisation avantageux, dans chaque système de contrôle de la température, l'au moins un élément de chauffage est alimenté par des moyens d'alimentation réglables, et les moyens d'alimentation réglables sont reliés à des moyens de pilotage configurés pour formuler une consigne de pilotage en fonction du résultat d'une comparaison entre une consigne de déformation maximale de surface d'onde, et une mesure de surface d'onde sur un faisceau laser dit amplifié, en sortie de l'élément d'amplification.

Le dispositif selon l'invention peut comprendre en outre des moyens de repérage relativement à l'élément d'amplification, configurés pour guider le positionnement du faisceau laser à amplifier de sorte qu'il se propage en ligne droite dans l'élément d'amplification.

L'invention concerne également un système comprenant un dispositif selon l'invention, ainsi que des moyens de multiplication de passages, configurés pour multiplier un nombre de passages du faisceau laser à amplifier, dans l'élément d'amplification.

Avantageusement, les moyens de multiplication de passages comprennent deux réflecteurs disposés du côté de la face latérale d'entrée de l'élément d'amplification, et deux réflecteurs disposés du côté de la face latérale de sortie de l'élément d'amplification.

Les moyens de multiplication de passages peuvent comprendre également une lame quart d'onde et un réflecteur, configurés pour doubler un nombre de passages du faisceau laser à amplifier dans l'élément d'amplification.

L'invention couvre également un système comprenant un dispositif d'amplification laser selon l'invention, et une source d'émission du faisceau laser à amplifier, configurée pour que le faisceau laser à amplifier se propage en ligne droite dans l'élément d'amplification, entre sa face d'entrée et sa face de sortie.

En variante, le système peut comprendre un dispositif d'amplification laser selon l'invention, et un logement configuré pour recevoir une source d'émission du faisceau laser à amplifier, et pour que le faisceau laser à amplifier se propage en ligne droite dans l'élément d'amplification, entre sa face d'entrée et sa face de sortie.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés parmi lesquels :
- la figure 1 illustre un exemple de dispositif d'amplification laser selon l'art antérieur ;
- la figure 2 illustre un premier mode de réalisation d'un dispositif d'amplification laser selon l'invention, selon une vue en perspective ;
- la figure 3 illustre de façon schématique le dispositif de la figure 2, selon une vue en coupe ;
- les figures 4A à 4E illustrent différentes géométries possibles pour les systèmes de contrôle de la température selon l'invention, adaptées notamment à différentes répartitions du dépôt de la puissance de pompage et différentes répartitions des flux d'échange thermique par les faces latérales de l'élément d'amplification;
- la figure 5 illustre un deuxième mode de réalisation d'un dispositif d'amplification laser selon l'invention, selon une vue en perspective, mettant en œuvre une boucle d'asservissement pour l'optimisation de la qualité optique du faisceau laser amplifié ;
- les figures 6A et 6B illustrent un troisième mode de réalisation d'un dispositif d'amplification laser selon l'invention, respectivement selon une vue en perspective et selon une vue en coupe, et comprenant une lentille externe de pré-compensation ; et
- la figure 7 illustre un exemple d'un système complet comprenant un dispositif d'amplification laser selon l'invention.

### EXPOSÉ DÉTAILLÉ DE MODES DE RÉALISATION PARTICULIERS

La figure 2 illustre un premier mode de réalisation d'un dispositif 200 d'amplification laser selon l'invention, selon une vue en perspective.

Le dispositif 200 comprend une plaque amplificatrice 213, formant un milieu amplificateur.

La plaque amplificatrice 212 peut être constituée d'un cristal, d'une céramique, ou éventuellement d'un verre, dopé(e) par exemple par des ions trivalents de terre rare. L'ion dopant est par exemple l'ion ytterbium Yb³⁺, typique des milieux laser à trois niveaux. En variante, l'ion dopant néodyme Nd³⁺, ou tout autre élément. En variante, la plaque amplificatrice forme un milieu actif à 4 niveaux.

Dans la suite, on considère par exemple que la plaque amplificatrice est en Yb³⁺ :YAG.

La plaque amplificatrice présente ici une forme de parallélépipède rectangle.

La plaque amplificatrice 213 est encadrée latéralement par deux barres d'extrémité 2141, 2142.

Les deux barres d'extrémité 2141, 2142 sont constituées du même matériau que la plaque amplificatrice 213, à la différence que ce matériau est dopé dans la plaque amplificatrice 213, et non dopé dans les barres d'extrémité 2141, 2142. Dans la suite, on considère par exemple que deux barres d'extrémité 2141, 2142 sont en YAG.

Lesdites barres d'extrémité étant non dopées, elles ne réalisent aucune amplification de signal. En fonctionnement, seule la plaque amplificatrice est chauffée par le pompage optique. Ce chauffage induit dans la plaque amplificatrice et dans les barres d'extrémité voisines, des effets thermo-optique et thermo-mécanique.

Dans la littérature, on les désigne parfois par le terme anglais « end caps », ou « undoped ends ».

Les deux barres d'extrémité 2141, 2142 et la plaque amplificatrice 213 forment ensemble un assemblage nommé « élément d'amplification 210 ».

Une première barre d'extrémité 2141 présente une face latérale adjacente à la plaque amplificatrice 213, et une face latérale opposée formant une face latérale d'entrée de l'élément d'amplification, pour un faisceau laser à amplifier 300.

L'autre barre d'extrémité 2142 présente une face latérale adjacente à la plaque amplificatrice 213, et une face latérale opposée formant une face latérale de sortie 212 de l'élément d'amplification, pour le faisceau laser à amplifier 300.

Chaque barre d'extrémité 2141, 2142 s'étend donc adjacente à une face latérale de la plaque amplificatrice 213.

Lesdites faces latérales de la plaque amplificatrice 213 sont parallèles entre elles, ou sensiblement (à quelques degrés près, par exemple à +/- 2° près). Elles s'étendent ici dans des plans parallèles au plan (xy) d'un repère orthonormé (xyz).

Les barres d'extrémité 2141, 2142 et la plaque amplificatrice 213 sont des éléments distincts les uns des autres, bien que fixés ensemble pour former un élément composite.

Chaque barre d'extrémité 2141, 2142 est par exemple fixée contre la plaque amplificatrice par adhérence de surface, c'est-à-dire par un collage sans utilisation d'une couche adhésive intercalaire. Chaque barre d'extrémité 2141, 2142 s'étend alors en contact physique direct avec une face latérale respective de la plaque amplificatrice. D'autres collages peuvent cependant être mis en œuvre sans sortir du cadre de l'invention.

Les deux barres d'extrémité 2141, 2142 présentent chacune une forme de parallélépipède rectangle.

Elles s'étendent ici de part et d'autre de la plaque amplificatrice, symétriques entre elles relativement au plan (xy).

Les deux barres d'extrémité 2141, 2142 présentent avantageusement les mêmes dimensions que la plaque amplificatrice, selon les axes (x) et (y).

Elles sont alignées avec la plaque amplificatrice selon ces mêmes axes, de sorte qu'elles forment avec ladite plaque un parallélépipède rectangle.

L'élément d'amplification 210 présente une face latérale d'entrée, ou face d'entrée, pour l'entrée d'un faisceau laser à amplifier 300, et une face latérale de sortie 212, ou face de sortie, du côté opposé, pour la sortie du faisceau laser à amplifier.

La face latérale d'entrée s'étend ici sur la première barre d'extrémité 2141, et la face latérale de sortie s'étend ici sur la seconde barre d'extrémité 2142.

On parle de face d'entrée et de face de sortie, pour désigner les faces par lesquelles le faisceau laser à amplifier entre dans l'élément d'amplification 210, puis en sort après s'être propagé en ligne droite à l'intérieur de celui-ci, et en particulier à l'intérieur de la plaque amplificatrice. Comme détaillé dans la suite, le faisceau laser à amplifier peut effectuer plusieurs passages successifs dans l'élément d'amplification 210, et entrer de nouveau dans l'élément d'amplification 210 par la face dite de sortie, puis sortir de nouveau de l'élément d'amplification 210 par la face dite d'entrée.

Les faces d'entrée et de sortie 212 sont parallèles entre elles, ou sensiblement (à quelques degrés près, par exemple à +/- 2° près). Elles s'étendent ici dans des plans parallèles au plan (xy).

De préférence, elles sont traitées anti-reflet haut flux, à la longueur d'onde du faisceau laser à amplifier (autour de 1030 nm dans l'exemple considéré du Yb³⁺ :YAG).

Les barres d'extrémité permettent notamment de réduire une déformation thermo-mécanique des faces d'entrée et de sortie, lorsque le pompage laser est mis en œuvre dans la plaque amplificatrice.

L'amplitude crête à crête de déformation thermo-mécanique est par exemple de 3 µm sans les barres d'extrémité, dans un système tel que décrit dans la demande de brevet FR 1652393. Elle peut être réduite de façon à valoir entre 1 µm et 2 µm, voire entre 1 µm et 1,5 µm, et même moins, dans un système selon l'invention, selon l'épaisseur de plaque et/ou la puissance de pompe utilisée(s).

Une face supérieure de l'élément d'amplification 210 est définie par les faces supérieures respectives des deux barres d'extrémité 2141, 2142 et de la plaque amplificatrice 213. Ici, mais de manière non limitative, ces faces supérieures s'étendent coplanaires, parallèles au plan (yz).

De la même façon, une face inférieure de l'élément d'amplification 210 est définie par les faces inférieures respectives des deux barres d'extrémité 2141, 2142 et de la plaque amplificatrice 213. Ici, mais de manière non limitative, ces faces inférieures s'étendent coplanaires, parallèles au plan (yz).

Les faces supérieure et inférieure de l'élément d'amplification 210 sont recouvertes chacune d'un système de contrôle de la température respectif, décrit dans la suite.

De préférence, les faces supérieure et inférieure de l'élément d'amplification 210 sont parallèles entre elles, ou sensiblement (à quelques degrés près), et orthogonales aux faces d'entrée et de sortie 212, ou sensiblement (à quelques degrés près, par exemple à +/- 2° près). Elles s'étendent ici dans des plans parallèles au plan (yz).

La plaque amplificatrice 210 présente donc deux faces latérales, contre lesquelles s'étendent les barres d'extrémité, des faces inférieure et supérieure, et deux autres faces opposées, dites faces transverses, dont l'une au moins forme une face dite de pompage, pour l'entrée d'un faisceau de pompe 400.

Le faisceau de pompe se propage ici dans la plaque amplificatrice selon un axe sensiblement orthogonal à cette face de pompage (à quelques degrés près), ici selon l'axe (y). De préférence, la puissance de pompe est répartie quasiment uniformément surtout le volume de la plaque amplificatrice.

La face transverse, du côté opposé à la face de pompage, est orthogonale aux faces d'entrée et de sortie 212, et aux faces supérieure et inférieure de l'élément d'amplification 210. Elle s'étend ici dans un plan parallèle au plan (xz).

Cette face transverse présente préférentiellement, mais de manière non exclusive, un traitement anti-reflet à la longueur d'onde du faisceau laser à amplifier, et, dans le cas d'un pompage par la seule face de pompage, un traitement dichroïque pour recycler le faisceau de pompe, de type réflecteur à la longueur d'onde de la pompe (autour de 940 nm dans l'exemple considéré du Yb³⁺: YAG). Dans le cas d'un pompage par les deux faces transverses, (ces faces pouvant être symétriques par rapport au plan (xz)), les traitements des faces ne sont que de type anti-reflet et le dopage de la plaque est augmenté pour réduire la profondeur de pénétration d'un facteur deux.

La face de pompage peut être légèrement inclinée relativement au plan (Oxz), pour former une protection supplémentaire à l'égard de phénomènes d'émission spontanée amplifiée.

L'épaisseur E (selon l'axe (x)) de la plaque amplificatrice 210 est avantageusement égale ou supérieure à 3 mm, par exemple comprise entre 3 mm et 10 mm. Les barres d'extrémité présentent ici, mais de manière non limitative, la même épaisseur E.

La largeur (selon l'axe (y)) de la plaque est comprise de préférence entre 20 mm et 50 mm.

Le rapport entre la largeur et l'épaisseur de la plaque amplificatrice est compris par exemple entre 3 et 15, par exemple 10.

Les dimensions de la plaque amplificatrice sont par exemple 5 mm d'épaisseur, 10 mm de longueur (selon l'axe (z)), et 25 mm de largeur.

Cette plaque amplificatrice offre potentiellement un gain optique compris entre 15 et 20 dB, et permet d'amplifier des impulsions de durée de l'ordre de la nanoseconde jusque dans la gamme 100 mJ.

De la même façon, la largeur (selon l'axe (y)) de chaque barre d'extrémité 2141, 2142 est comprise de préférence entre 20 mm et 50 mm.

Chaque barre d'extrémité présente une longueur (selon l'axe (z)) par exemple comprise entre 2 mm et 7 mm, de préférence entre 3 mm et 4 mm.

La description de la plaque amplificatrice et de l'élément d'amplification donnée ci-dessus correspond à son état au repos, en l'absence d'une déformation thermo-mécanique générée par le pompage optique du faisceau laser à amplifier, et les phénomènes possibles d'absorption parasite.

La face supérieure de l'élément d'amplification est recouverte par un élément de refroidissement 231A, encadré par deux éléments de chauffage 232A, formant ensemble un système 230A de contrôle de la répartition spatiale de la température dans le volume de l'élément d'amplification, et plus particulièrement dans le volume de la plaque amplificatrice, nommé dans la suite, système de contrôle de la température.

De la même façon, la face inférieure de l'élément d'amplification est recouverte par un élément de refroidissement 231B, encadré par deux éléments de chauffage 232B, formant ensemble un système de contrôle de la température 230B.

Dans l'exemple représenté en figure 2, chaque élément de refroidissement et chaque élément de chauffage s'étend selon toute la largeur (axe (y)) de l'élément d'amplification, et ses dimensions sont invariantes selon cet axe de la largeur.

De préférence, mais de manière non exclusive, les éléments de refroidissement 231A, 231B sont constitués chacun par un bloc métallique, percé de part en part par un tunnel formant un circuit d'écoulement pour un liquide de refroidissement tel que de l'eau.

Les éléments de refroidissement 231A, 231B sont connus en soi.

Chaque élément de refroidissement 231A, respectivement 231B, recouvre une région dite centrale de la face supérieure, respectivement inférieure de l'élément d'amplification. La région est dite centrale car elle s'étend à mi-distance entre les faces d'entrée et de sortie de l'élément d'amplification.

En particulier, chaque élément de refroidissement 231A, respectivement 231B, recouvre en totalité ou en partie les faces supérieure, respectivement inférieure de la plaque amplificatrice 213. De préférence, les éléments de refroidissement ne dépassent pas jusqu'au-dessus, respectivement au-dessous des barres d'extrémité.

Chaque élément de refroidissement 231A, 231B est espacé des éléments de chauffage correspondant 232A, 232B par un gap compris entre 200 µm et 1 mm.

Les éléments de chauffage recouvrent tout ou partie des faces inférieures, respectivement supérieures des barres d'extrémité, et peuvent également recouvrir une partie de la face inférieure, respectivement supérieure de la plaque amplificatrice.

De préférence, chaque élément de chauffage est constitué par au moins une électrode chauffante.

L'élément de chauffage 232A, respectivement 232B, est formé ici par une paire respective d'électrodes chauffantes.

Ici, les électrodes chauffantes 232A, 232B recouvrent ensemble plus de la moitié de la surface de la face supérieure, respectivement inférieure, de l'élément d'amplification.

Les électrodes chauffantes 232A, respectivement 232B, recouvrent des régions périphériques de la face supérieure, respectivement inférieure de l'élément d'amplification. Ces régions sont dites périphériques, car elles s'étendent le long des faces d'entrée et de sortie de l'élément d'amplification.

Les électrodes chauffantes 232A, respectivement 232B, recouvrent en totalité ou en partie les faces supérieures, respectivement inférieures, des deux barres d'extrémité 2141, 2142. Les électrodes chauffantes peuvent dépasser, ou ne pas dépasser, jusqu'au-dessus, respectivement au-dessous de la plaque amplificatrice. Ici, elles recouvrent uniquement tout ou partie des faces inférieures, respectivement supérieures des barres d'extrémité.

Ici, la face supérieure, respectivement inférieure de l'élément d'amplification est recouverte directement par une couche à bas indice optique 220A, respectivement 220B, dite couche bas indice, elle-même recouverte directement par le système de contrôle de la température 230A, respectivement 230B.

Chaque couche bas indice 220A, 220B présente un indice optique inférieur à l'indice optique moyen de la plaque amplificatrice (que le pompage optique soit mis en œuvre ou non, les gradients d'indice formés alors dans la plaque amplificatrice étant bien inférieurs à la différence d'indice avec la couche bas indice).

Cela permet de confiner le faisceau laser de pompe entre les faces supérieure et inférieure de la plaque amplificatrice, et évite un risque de couplage parasite de la pompe vers les parties métalliques des systèmes de contrôle de la température 230A, 230B.

Pour simplifier la fabrication, les couches bas indice 220A, 220B recouvrent également les barres d'extrémité. Selon une variante non représentée, elles pourraient ne recouvrir que la plaque amplificatrice.

Les couches bas indice 220A, 220B sont par exemple, mais de manière non limitative, en saphir, déposé sous la forme d'une couche mince d'épaisseur comprise entre 200 µm et 1 mm, notamment selon la nature du matériau constituant les couches bas indice.

En variante, le système de contrôle de la température 230A, 230B repose directement sur la face supérieure, respectivement inférieure de l'élément d'amplification.

Selon l'invention, le système de contrôle de la température 230A et le système de contrôle de la température 230B sont symétriques, ou sensiblement symétriques l'un de l'autre, selon une symétrie orthogonale relativement à un plan 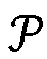 passant par la plaque amplificatrice.

Ici, le plan 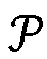 passe par le centre de la plaque amplificatrice (et de l'élément d'amplification).

Ici, le plan 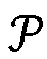 s'étend parallèle aux faces supérieure et inférieure de la plaque amplificatrice (et de l'élément d'amplification), définies par les axes (y) et (z) du repère (xyz).

La symétrie peut n'être pas parfaite, notamment du fait de l'angle d'inclinaison de la face de pompage.

Par exemple, un taux de recouvrement entre le système de contrôle de la température 230A, respectivement 230B, et son symétrique relativement au plan 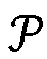 , est supérieur à 90%, et même supérieur à 95% voire même 98%.

En outre, dans l'exemple représenté en figure 2 mais de manière non limitative, chaque système de contrôle de la température 230A, 230B, présente des dimensions sensiblement invariantes par une rotation de 180° autour d'un axe Δ orthogonal aux faces supérieure et inférieure de la plaque amplificatrice (et de l'élément d'amplification).

En particulier, un taux de recouvrement entre chaque système de contrôle de la température 230A, 230B, et ce même système de contrôle de la température tourné de 180° autour de l'axe Δ, est supérieur à 90%, et même supérieur à 95% voire même 98%. Ici, ce taux de recouvrement est de 100%.

On peut remarquer que la combinaison entre ces deux invariances (par une rotation autour de l'axe Δ, et par une symétrie orthogonale relativement au plan 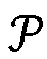 ), correspond dans le cas le plus typique à une symétrie centrale autour d'un point situé au centre géométrique de la plaque amplificatrice (et de l'élément d'amplification).

Le dispositif d'amplification selon l'invention est adapté à une propagation du faisceau laser 300 à amplifier, selon une ou plusieurs propagation(s) en ligne droite dans l'élément d'amplification, directement entre la face d'entrée et la face de sortie de l'élément d'amplification, sans réflexion(s) intermédiaire(s) sur une autre face de l'élément d'amplification. En particulier, le dispositif d'amplification selon l'invention est adapté à une propagation du faisceau laser à amplifier, selon un axe sensiblement orthogonal à la face d'entrée et/ou la face de sortie de l'élément d'amplification (à quelques degrés près, par exemple +/- 2° près), par exemple selon l'axe (z).

Les éléments de refroidissement 231A, 231B permettent de refroidir l'élément d'amplification, et en particulier la plaque amplificatrice, de préférence de manière symétrique par une rotation de 180° autour de l'axe Δ.

Ils permettent de réduire la température moyenne de l'élément d'amplification, et en particulier de la plaque amplificatrice, durant le pompage optique. De préférence, les éléments de refroidissement 231A, 231B permettent de maintenir la température moyenne de la plaque amplificatrice inférieure à environ 350 K dans le cas général, et même inférieure à environ 450 K pour les puissances de pompe les plus élevées.

Les éléments de refroidissement 231A, 231B et électrodes chauffantes 232A, 232B, lorsqu'elles sont actionnées, permettent de modifier la forme des surfaces isothermes dans l'élément d'amplification incluant la plaque amplificatrice.

En d'autres termes, ils forment ensemble des moyens pour moduler localement une répartition de température, et donc d'indice optique, à l'intérieur de l'élément d'amplification incluant la plaque amplificatrice.

Ainsi, on peut ensuite exploiter cette possibilité d'agir localement sur la forme des surfaces isothermes dans l'élément d'amplification, pour conserver une grande qualité de faisceau après traversée de l'élément d'amplification, en particulier pour un faisceau se propageant en ligne droite entre la face d'entrée et la face de sortie de l'élément d'amplification, en passant par la plaque amplificatrice.

En particulier, l'invention permet de contrôler localement la forme des gradients de température internes à l'élément d'amplification, et de compenser les différences de températures qui s'y développent, selon chaque dimension de l'espace. Le volume alloué à ce contrôle inclut non seulement le volume de la plaque amplificatrice elle-même, mais également le volume des barres d'extrémité.

L'invention permet de propager la surface d'onde du faisceau laser amplifié, sans la déformer, à travers l'élément d'amplification en passant par la plaque amplificatrice, et en dépit d'une épaisseur de plaque importante, par exemple entre 3 mm et 10 mm d'épaisseur.

L'invention est mise en œuvre en combinaison avec une propagation en ligne droite du faisceau laser à amplifier, dans l'élément d'amplification en passant par la plaque amplificatrice, entre la face d'entrée et la face de sortie de l'élément d'amplification. Cela permet en outre d'éliminer les défauts liés à des réflexions multiples sur les faces supérieure et inférieure refroidies.

Les éléments de refroidissement et électrodes chauffantes peuvent être configurés ensemble pour qu'en fonctionnement, lorsque le faisceau laser à amplifier se propage en ligne droite dans l'élément d'amplification, en faisant un ou plusieurs passages entre la face d'entrée et la face de sortie de l'élément d'amplification, la température moyenne des points de l'élément d'amplification, intégrée selon l'axe de propagation du faisceau laser à amplifier dans l'élément d'amplification, soit constante sur toute la surface d'onde de ce faisceau.

En d'autres termes, les systèmes de contrôle de la température peuvent permettre de corriger intégralement l'effet de la lentille thermo-optique, correspondant aux effets thermo-optiques naturellement induits dans l'élément d'amplification incluant la plaque amplificatrice. L'effet thermo-mécanique, quant à lui, est réduit grâce à la présence des barres d'extrémité.

En variante, la correction de l'effet thermo-optique est seulement partielle. Dans ce cas, les systèmes de contrôle de la température peuvent être configurés ensemble pour que la température moyenne des points de l'élément d'amplification, intégrée selon l'axe de propagation du faisceau laser à amplifier dans l'élément d'amplification, corresponde à un indice optique moyen des points de l'élément d'amplification, qui, intégré selon le même axe et pour chaque point de la surface d'onde du faisceau laser à amplifier, correspond à une lentille thermo-optique de forme connue.

Les systèmes de contrôle de la température peuvent également permettre de corriger au moins une partie de l'effet de la déformation thermo-mécanique des faces d'entrée et de sortie de l'élément d'amplification.

Par exemple, la répartition de températures permet que chaque point de la surface d'onde présente une différence de chemin optique maîtrisée entre l'entrée et la sortie de l'élément d'amplification, qui compense entièrement les effets thermo-optiques et les effets thermo-mécaniques dans l'élément d'amplification incluant la plaque amplificatrice. Dans ce cas, le dispositif d'amplification selon l'invention ne comprend pas de lentille externe de pré-compensation.

Selon un autre exemple, la répartition de températures permet que chaque point de la surface d'onde parcoure un chemin optique maîtrisé entre l'entrée et la sortie de l'élément d'amplification, qui compense entièrement les effets thermo-optiques et partiellement les effets thermo-mécaniques dans l'élément d'amplification incluant la plaque amplificatrice. Une ou plusieurs lentille(s) externe(s) de pré-compensation compense(nt) alors l'effet résiduel non corrigé de la déformation thermo-mécanique.

Selon un autre exemple, la répartition de températures permet que chaque point de la surface d'onde parcoure un chemin optique maîtrisé entre l'entrée et la sortie de l'élément d'amplification, qui compense des premières contributions des déformations thermo-optiques et thermo-mécaniques, de sorte que l'effet résiduel non corrigé des déformations thermo-optiques et thermo-mécaniques corresponde à une ou plusieurs lentille(s) thermo-optique(s) de forme connue. A chaque lentille thermo-optique de forme connue correspond alors une lentille externe de pré-compensation, de forme connue. Cet effet résiduel peut alors être corrigé par la ou lesdites lentille(s) externe(s) de pré-compensation. Il s'agit de préférence de deux lentilles cylindriques, d'axes respectifs orthogonaux entre eux.

Le dispositif d'amplification selon l'invention peut être configuré pour être traversé plusieurs fois par le faisceau laser à amplifier, le chemin optique et l'intégration selon (z) étant alors considérés sur la somme des plusieurs traversées du faisceau laser à amplifier, depuis une première entrée dans l'élément d'amplification jusqu'à une dernière sortie hors de l'élément d'amplification.

En tout état de cause, on peut considérer que le dispositif d'amplification selon l'invention, comprenant le cas échéant une ou plusieurs lentille(s) externe(s) de pré-compensation, peut être configuré pour qu'un faisceau laser à amplifier incident, présentant une surface d'onde plane, présente en sortie du dispositif d'amplification selon l'invention une surface d'onde sensiblement plane, associée à une lentille thermique de focale la plus élevée possible.

Dans l'exemple représenté en figure 2, le faisceau laser à amplifier effectue un unique passage dans la plaque amplificatrice, en se propageant selon l'axe (z).

On suppose que l'effet thermo-mécanique dans l'élément d'amplification est corrigé par une lentille externe dite de pré-compensation, non représentée en figure 2.

Après amplification dans l'élément d'amplification incluant la plaque amplificatrice, chaque point de la surface d'onde du faisceau laser amplifié s'est propagé parallèlement à l'axe (z), en passant, lors de la traversée de l'élément d'amplification, par toute une série des points alignés selon l'axe (z), série de points à laquelle on peut associer une température moyenne donnée. Cette température moyenne fixe le chemin optique parcouru par le point considéré de la surface d'onde du faisceau amplifié. Les systèmes de contrôle de la température sont alors dimensionnés pour que ladite température moyenne soit la même pour chaque point de la surface d'onde du faisceau laser amplifié.

De manière plus générale, en considérant une surface (xy) propagée selon un ou plusieurs passages selon (z) dans l'élément d'amplification, chaque point de la surface (xy) se propage dans l'élément d'amplification selon une série de points alignés selon l'axe (z). On peut associer à cette série de points une température moyenne, qui est définie à l'issue de la propagation dans l'élément d'amplification. Les systèmes de contrôle de la température peuvent être dimensionnés pour que chaque point de ladite surface soit associé à une même température moyenne.

En particulier, les éléments de refroidissement refroidissent l'élément d'amplification 310 à proximité de ses faces supérieure et inférieure, en formant des zones froides 301A, 301B situées au niveau d'une région centrale de la face supérieure, respectivement inférieure l'élément d'amplification (voir figure 3).

Ces zones froides s'étendent ici en totalité ou en majeure partie dans la plaque amplificatrice 313.

Les éléments de chauffage permettent de former dans l'élément d'amplification 310, de part et d'autre de chacune de ces zones froides 301A, 301B, des zones chaudes 302A, 302B situées au niveau de régions périphériques de la face supérieure, respectivement inférieure de l'élément d'amplification (voir figure 3).

Ces zones chaudes ici s'étendent en totalité ou en majeure partie dans les barres d'extrémité 3141, 3142.

On peut ainsi compenser, à l'aide des éléments de chauffage, l'effet thermo-optique produit par le refroidissement combiné au pompage optique, et ce bien que le refroidissement soit mis en œuvre sur des surfaces importantes de la plaque amplificatrice.

En particulier, l'effet des zones froides, formées principalement dans la plaque amplificatrice, est compensé par des zones chaudes, formées principalement dans les barres d'extrémité.

En particulier, la température moyenne le long d'un chemin optique parallèle à (z) et passant par le centre de l'élément d'amplification, peut être sensiblement égale à la température moyenne le long d'un chemin optique parallèle à (z) et passant par un bord de l'élément d'amplification.

Ainsi, on peut conserver une valeur nulle de la différence de chemin optique (ou OPD, pour l'anglais « *Optical Path Différence* ») entre deux points de la surface d'onde du faisceau laser amplifié (hors déformations liées aux déformations thermo-mécaniques des faces d'entrée et sortie).

La présence des barres d'extrémité permet notamment d'augmenter un volume d'action pour les systèmes de contrôle de la température, et donc d'accéder à des qualités de surface d'onde encore améliorées.

Dans l'exemple illustré en figure 2 (et sur les autres figures également), on a représenté le cas particulier d'une plaque amplificatrice pompée par diodes selon une configuration transverse, le faisceau de pompage étant orienté de façon transverse, de préférence orthogonale, relativement à la direction de propagation du faisceau laser à amplifier.

A la figure 2, le faisceau de pompage est injecté par une unique face latérale de la plaque amplificatrice. En variante, des faisceaux de pompage peuvent être injectés par plusieurs faces latérales de la plaque amplificatrice, notamment deux faces latérales opposées, en particulier les deux faces transverses telles que décrites ci-avant.

En variante, le faisceau de pompe peut être injecté par la face d'entrée et/ou la face de sortie de l'élément d'amplification, de préférence incliné relativement au faisceau laser à amplifier. L'invention est donc associée préférentiellement à une configuration transverse, mais peut également s'appliquer à une géométrie de pompage longitudinale.

Comme précisé ci-avant, le dispositif d'amplification selon l'invention est adapté à une propagation du faisceau laser 300 à amplifier, selon une ou plusieurs propagation(s) en ligne droite dans l'élément d'amplification.

En pratique, le dispositif d'amplification peut comprendre des moyens de repérage dans l'espace, pour guider le positionnement d'une source laser d'émission du faisceau laser à amplifier de sorte que le faisceau laser à amplifier se propage en ligne droite dans l'élément d'amplification.

Ces moyens de repérage, non représentés, peuvent comprendre des éléments tels qu'une mire ou une inscription sur un boîtier mécanique recevant le dispositif d'amplification.

De tels moyens sont bien connus dans le domaine des amplificateurs laser, pour aider à un centrage et un pointage optimaux d'un faisceau laser.

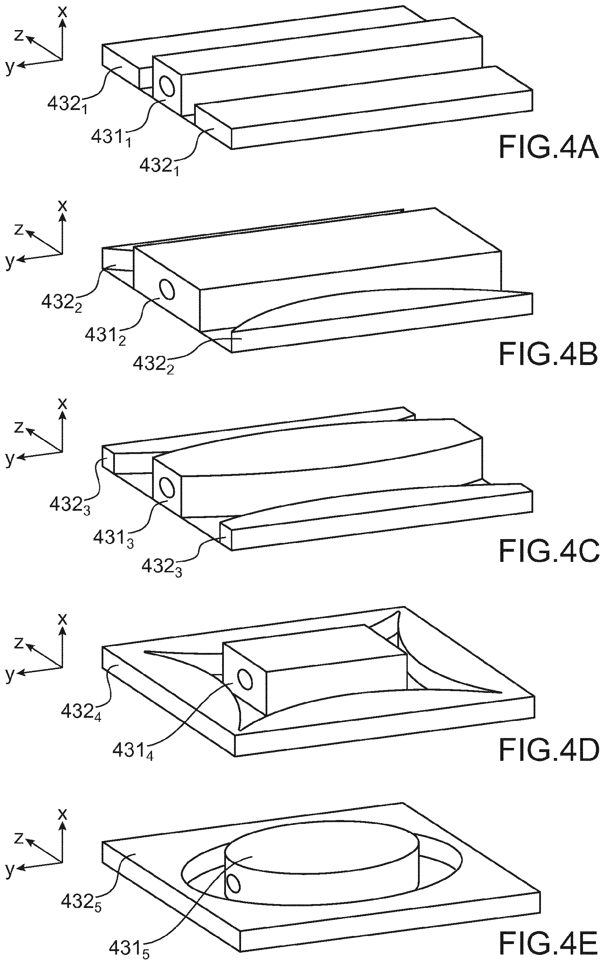

Les figures 4A à 4E illustrent différents exemples de géométries d'un système de contrôle de la température selon l'invention.

Chaque géométrie est caractérisée par la forme de l'élément de refroidissement, la forme de la ou les électrode(s) chauffante(s), et par leurs dimensions respectives.

Comme illustré sur les figures, chaque électrode présente la forme d'un cylindre dont la génératrice est parallèle à l'axe (x), et dont la base s'étend parallèle au plan (yz), c'est-à-dire parallèle aux faces supérieure et inférieure de la plaque amplificatrice (et de l'élément d'amplification).

A la figure 4A, le système de contrôle de la température est constitué d'un élément de refroidissement 431₁, en forme de parallélépipède rectangle, qui s'étend sur toute la largeur de l'élément d'amplification (selon l'axe (y)).

De part et d'autre de l'élément de refroidissement 431₁ selon l'axe (z), s'étendent deux électrodes 432₁ symétriques l'une de l'autre. Chaque électrode présente une forme de parallélépipède rectangle, s'étendant sur toute la largeur de l'élément d'amplification.

Chaque élément de refroidissement 431₁ et chaque électrode 432₁ présente des dimensions invariantes selon l'axe (y).

Les configurations suivantes ne sont pas uniformes selon l'axe (y), notamment pour prendre en compte les échanges thermiques qui ont lieu au niveau des faces transverses de l'élément d'amplification incluant la plaque amplificatrice, et/ou une répartition spatiale de la puissance de pompe non uniforme selon l'axe (y).

Sur la figure 4B, l'élément de refroidissement 431₂ présente une forme de parallélépipède rectangle, uniforme selon l'axe (y), qui s'étend sur toute la largeur de l'élément d'amplification, et sur plus de la moitié de sa longueur.

Les électrodes 432₂ diffèrent des électrodes de la figure 4A en ce que leurs faces verticales (parallèles à l'axe (x)), situées au regard de l'élément de refroidissement, sont des faces non planes, dont la forme est définie dans un plan (yz) orthogonal à l'axe (x).

Ces faces verticales présentent chacune une forme arrondie, définie dans un plan (yz) orthogonal à l'axe (x). En d'autres termes, ces faces verticales sont définies chacune par une ligne courbe s'étendant dans un plan (yz).

On peut également dire qu'elles présentent une courbure, le terme de courbure ne se limitant pas ici à une forme définie par un arc de cercle.

Ces faces verticales sont ici bombées vers l'intérieur de l'élément d'amplification, pour tenir compte de la présence de zones plus chaudes et plus difficiles à refroidir, au centre géométrique de l'élément d'amplification incluant la plaque amplificatrice.

En d'autres termes, les électrodes s'étendent plus ou moins profondément selon l'axe (z), en fonction de la position considérée selon l'axe (y).

Sur la figure 4C, l'élément de refroidissement 431₃ diffère de l'élément de refroidissement de la figure 4B en ce que ses faces verticales (parallèles à l'axe (x)), situées au regard d'une électrode, présentent une courbure.

En d'autres termes, ces faces verticales sont arrondies, définies chacune par une ligne courbe s'étendant dans un plan (yz).

Ces faces verticales sont ici bombées vers l'extérieur de l'élément d'amplification, pour compenser plus encore les effets de la présence de zones plus chaudes au centre géométrique de l'élément d'amplification.

Les électrodes 432₃ présentent également chacune une face bombée vers l'élément de refroidissement, comme à la figure 4B.

Sur la figure 4D, l'élément de refroidissement 431₄ présente une forme de parallélépipède rectangle, qui s'étend sur une partie seulement de la largeur de l'élément d'amplification, et sur plus de la moitié de sa longueur.

La ou les électrodes 432₄ entoure(nt) entièrement l'élément de refroidissement 431₄, en longeant la face d'entrée, la face de sortie, et les deux faces transverses de l'élément d'amplification (non représenté). Il peut s'agir d'une unique électrode, formée d'un seul tenant, ou d'un réseau d'électrodes.

On peut ainsi tenir compte des échanges thermiques qui ont lieu au niveau des faces transverses de l'élément d'amplification.

Les faces verticales de la ou des électrode(s) 432₄, parallèles à l'axe (x), et situées au regard de l'élément de refroidissement, présente(nt) chacune une courbure.

En d'autres termes, ces faces verticales sont chacune arrondies, définies chacune par une ligne courbe s'étendant dans un plan (yz).

Elles sont en particulier bombées chacune vers l'élément de refroidissement, pour une efficacité de réchauffage plus grande autour d'un plan (xz) passant par le centre de la plaque amplificatrice.

Sur la figure 4E, l'élément de refroidissement 431₅ présente une forme de cylindre à base ovale, entouré par une électrode 432₅ en forme d'un parallélépipède rectangle percé par une ouverture ovale.

On peut ainsi tenir compte d'échanges thermiques intenses ayant lieu au niveau des faces transverses de l'élément d'amplification.

La géométrie optimale des éléments de refroidissement et des électrodes chauffantes dépend de la répartition de la charge thermique totale dissipée par le faisceau de pompe dans l'élément d'amplification, et en particulier dans la plaque amplificatrice, et de la valeur de cette charge thermique.

Elle dépend également des conditions d'échange thermique aux limites sur les faces de l'élément d'amplification, par exemple sur les faces transverses.

La recherche de la géométrie optimale correspond généralement à la recherche d'une lentille thermique globale, associée au dispositif d'amplification en fonctionnement, présentant une focale aussi longue que possible.

On voit donc que selon l'invention, les éléments de refroidissement et les électrodes chauffantes peuvent présenter différentes sections dans un plan parallèle au plan (yz).

Chacun des modes de réalisation représentés aux figures 4A à 4E présente une symétrie, notamment une invariance par une rotation de 180° autour d'un axe (x). Des variantes non symétriques sont aussi possibles, par exemple pour tenir compte de répartitions du dépôt de la puissance de pompage non symétriques (qui varient par exemple au fur et à mesure que l'on s'éloigne de la face d'injection de la puissance de pompe).

De la même façon, la symétrie orthogonale relativement au plan 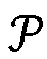 , n'est pas forcément parfaite, par exemple pour tenir compte de répartitions du dépôt de la puissance de pompage non parfaitement symétriques.

L'invention n'est pas limitée aux exemples illustrés ici, les éléments de refroidissement et les éléments de chauffage pouvant présenter des formes variées.

De la même façon, les éléments de refroidissement et les éléments de chauffage peuvent présenter des dimensions variées. Par exemple, chaque élément de chauffage peut recouvrir une fraction comprise entre 10% et 50% de la surface totale de la face supérieure, respectivement inférieure de l'élément d'amplification.

La forme et les dimensions de chaque système de contrôle de la température d'un dispositif d'amplification selon l'invention peuvent être choisies en fonction de paramètres tels que la puissance de pompage, et le matériau constituant l'élément d'amplification (dopé dans la plaque amplificatrice, non dopé dans les barres d'extrémité).

Le choix d'une forme donnée pour la géométrie du système de contrôle de la température permet de s'adapter à différentes répartitions spatiales de dépôt de la puissance de pompage, mais aussi à différentes répartitions des flux d'échange thermique par les faces latérales de l'élément d'amplification.

La géométrie optimale peut être sélectionnée par des simulations de températures dans l'élément d'amplification et de déformation résultante de la surface d'onde du faisceau laser après amplification.

Après avoir défini une géométrie optimale des éléments de chauffage et des éléments de refroidissement, on définit aussi une puissance de chauffage optimale à générer au moyen des éléments de chauffage.

On définit en particulier une valeur optimale de la puissance électrique fournie aux éléments de chauffage, associée à une déformation minimale de surface d'onde après traversée de l'élément d'amplification en passant par la plaque amplificatrice.

On pourra trouver dans la demande de brevet FR 1652393 des illustrations de cette recherche de valeur optimale de la puissance électrique.

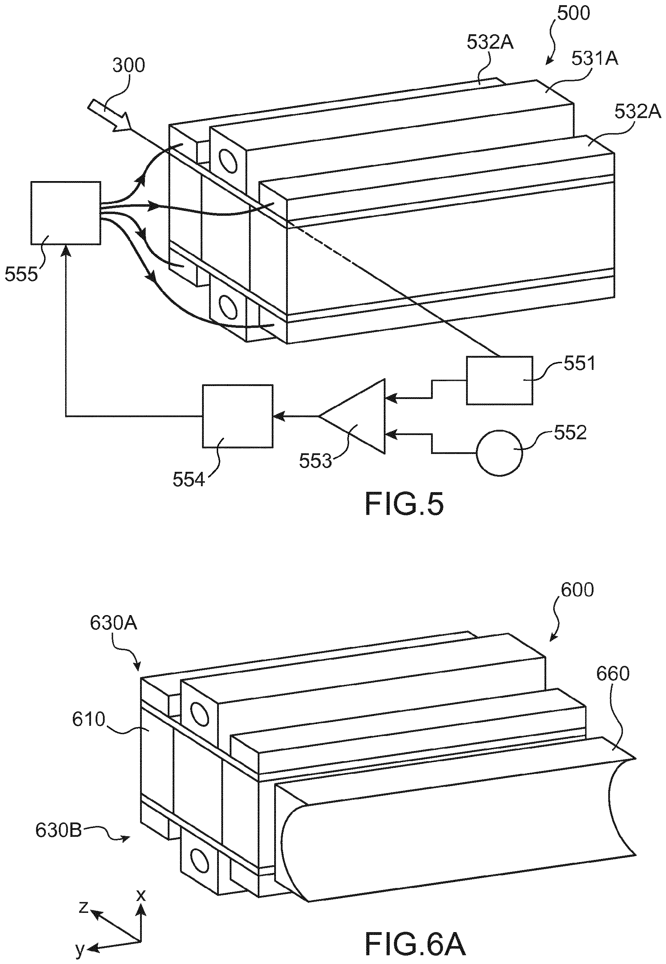

La figure 5 illustre ainsi un deuxième mode de réalisation d'un dispositif d'amplification laser 500 selon l'invention, selon une vue en perspective, pour l'automatisation du réglage de la puissance électrique optimale à fournir à chaque électrode chauffante.

Ce deuxième mode de réalisation ne sera décrit que pour ses différences relativement au mode de réalisation de la figure 2.

Les électrodes chauffantes 532A et 532B sont reliées à des moyens d'alimentation électrique 555, configurés pour fournir une puissance électrique d'alimentation à chaque électrode chauffante.

Ces moyens d'alimentation électriques 555 sont réglables, la puissance électrique qu'ils fournissent à chaque électrode chauffante étant fonction d'une consigne de pilotage qu'ils reçoivent.

Chaque électrode peut être alimentée par une valeur différente de puissance électrique.

La consigne de pilotage est fournie par des moyens de pilotage 554, par exemple un processeur. Elle est formulée en tenant compte du résultat d'une comparaison entre une consigne de déformation maximale de surface d'onde, et une mesure de la surface d'onde du faisceau laser amplifié, en sortie de l'élément d'amplification.

La comparaison est mise en œuvre par un comparateur 553, recevant en entrée la consigne 552 de déformation maximale, et la mesure de surface d'onde.

La consigne 552 de déformation maximale est une valeur fixe stockée dans une mémoire.

La mesure de surface d'onde est fournie par des moyens de mesure de surface d'onde 551. Elle est mise en œuvre sur le faisceau laser amplifié, notamment sur un échantillon de celui-ci, prélevé par exemple à l'aide d'un miroir partiellement réfléchissant.

De préférence, la consigne de pilotage est adaptée pour maintenir la déformation de surface d'onde du faisceau laser amplifié à une valeur minimale.

On réalise ainsi une boucle d'asservissement.

On peut ainsi mettre en œuvre un ajustement dynamique de la puissance électrique fournie aux électrodes, et donc de la puissance de chauffage émise par celles-ci, pour maintenir en permanence une qualité optique optimale du faisceau laser amplifié et prendre en compte des variations de la puissance laser.

La figure 6A illustre un troisième mode de réalisation d'un dispositif d'amplification laser 600 selon l'invention, selon une vue en perspective.

Ce troisième mode illustre une lentille externe de pré-compensation, telle que mentionnée précédemment.

Ce troisième mode de réalisation, associant l'élément d'amplification 610 à une lentille externe 660 de pré-compensation des distorsions de la surface d'onde, est celui qui permet la plus grande finesse de contrôle en vue d'une annulation quasi-totale des déformations de surface d'onde après amplification.

Ce mode de réalisation ne sera décrit que pour ses différences relativement au mode de réalisation de la figure 2.

Selon ce mode de réalisation, une lentille externe 660, dite de de pré-compensation, s'étend à l'entrée ou à la sortie de l'élément d'amplification, sur toute l'étendue de l'une de ses faces d'entrée ou sortie, pour compenser au moins certains des effets thermiques générés dans l'élément d'amplification par le pompage optique.

Il s'agit ici d'une lentille plan-cylindre, généralement plan-concave (type de lentille principalement lié au coefficient de dilatation thermique du matériau de la plaque amplificatrice et des barres d'extrémité).

Elle coopère avec les systèmes de contrôle de la température 630A, 630B, pour compenser les effets thermiques engendrés par le pompage optique dans la plaque amplificatrice.

Ces effets thermiques comprennent les effets thermo-optiques liés à des répartitions de températures dans l'élément d'amplification, et les effets thermo-mécaniques correspondant à la déformation mécanique des faces d'entrée et de sortie de l'élément d'amplification.

De préférence, on corrige la plus grande partie des déformations d'origine thermo-mécanique de manière statique, par cette lentille externe de pré-compensation, lentille dont la focale est alors de signe opposé à celle d'origine thermo-mécanique. Le rôle des systèmes de contrôle de la température devient, essentiellement, celui d'une compensation des effets thermo-optiques.

Dans certaines configurations, la lentille externe de pré-compensation 660 n'est pas nécessaire, les systèmes de contrôle de la température pouvant corriger intégralement la lentille thermo-optique et la lentille thermo-mécanique induites par le pompage optique dans la plaque amplificatrice.

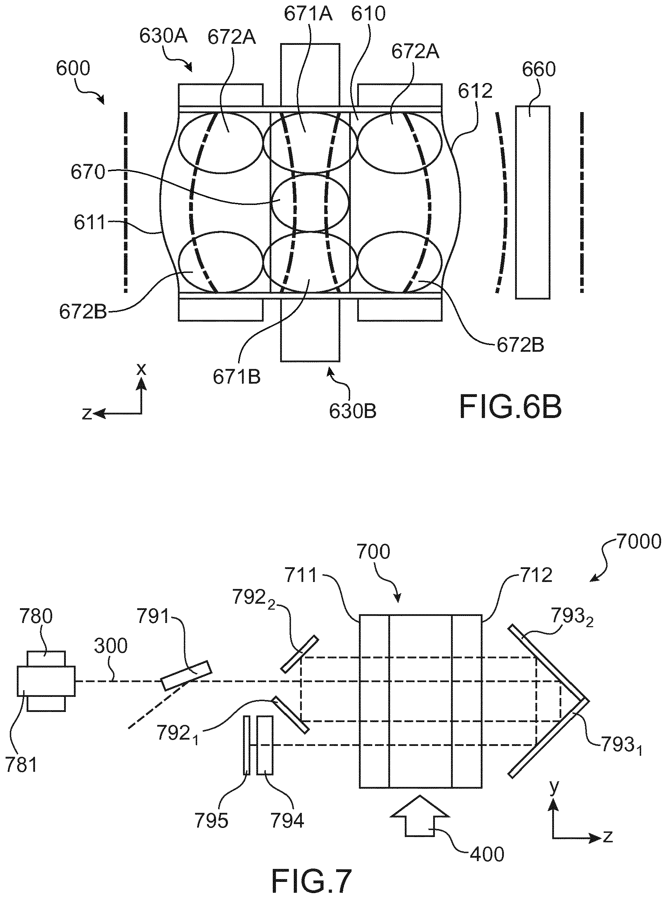

La figure 6B illustre le dispositif d'amplification laser 600 selon une vue en coupe dans un plan parallèle à (xz). Pour des raisons de lisibilité, l'épaisseur de la plaque amplificatrice est exagérée.

On a représenté en pointillé, de façon schématique, la surface d'onde du faisceau laser en cours d'amplification, à différentes étapes de la propagation dudit faisceau laser à l'intérieur de la plaque amplificatrice.

Les systèmes de contrôle de la température 630A, 630B sont actionnés, formant à l'intérieur de l'élément d'amplification des régions refroidies 671A, 671B, sous les éléments de refroidissement, et des régions chauffées 672A, 672B, sous les électrodes chauffantes.

Le pompage optique est actionné, formant une région chauffée 970 au centre de la plaque amplificatrice.

En entrée de l'élément d'amplification, la surface d'onde du faisceau laser à amplifier est supposée plane. Elle subit une déformation initiale liée à la déformation mécanique de la face d'entrée 911, puis une première série de déformations lors de sa propagation de la face d'entrée 911, jusqu'au centre de l'élément d'amplification. Elle subit ensuite une seconde série de déformations lors de la propagation du centre de l'élément d'amplification jusqu'à la face de sortie 912, sensiblement symétrique à la première série de déformations, puis une dernière déformation de sortie liée à la déformation thermo-mécanique de la face de sortie 912.

La surface d'onde du faisceau laser amplifié présente alors, en sortie de l'élément d'amplification, une déformation résiduelle, qui est corrigée par la lentille 960.

Cette déformation résiduelle est délimitée dans l'espace par deux formes cylindriques, définissant la forme de la lentille 660.

Selon une variante non représentée, la surface d'onde du faisceau laser amplifié présente, en sortie de la plaque amplificatrice, une déformation résiduelle définie par deux cylindres d'axes orthogonaux. Cette déformation est alors compensée par deux lentilles plan-cylindre, les axes des cylindres étant orthogonaux entre eux et situés dans un plan (xy).

En variante, une déformation, asphérique, peut être compensée par une unique lentille asphérique.

On va maintenant décrire, en référence à la figure 7, un système complet 7000 d'amplification laser selon l'invention, comprenant un dispositif d'amplification laser selon l'invention 700.

Le système est représenté de façon schématique, selon une vue de dessus.

Le système 7000 comprend un support 780, ou logement, configuré pour recevoir la source laser 781 d'émission du faisceau laser à amplifier.

Le support 780 et le dispositif d'amplification laser 700 sont positionnés l'un relativement à l'autre, de sorte que le faisceau laser à amplifier se propage en ligne droite dans l'élément d'amplification, directement depuis sa face d'entrée 711 jusqu'à sa face de sortie 712, sans réflexion intermédiaire sur les faces supérieure et inférieure.

Le faisceau laser à amplifier se propage notamment selon une direction orthogonale aux faces d'entrée et sortie de l'élément d'amplification (considérées au repos, en l'absence de déformation thermo-mécanique).

La source laser 781 peut faire partie intégrante du système d'amplification laser selon l'invention.

Afin d'augmenter le gain optique sur le faisceau laser à amplifier, le système 7000 comprend des moyens pour mettre en œuvre plusieurs passages successifs du faisceau laser à amplifier, à travers l'élément d'amplification et selon sa longueur. Le faisceau laser à amplifier se propage parallèle à la même direction, à chacun de ses passages à travers l'élément d'amplification.

Dans tout le texte, on nomme faisceau laser amplifié, le faisceau laser à amplifier, obtenu après amplification par l'ensemble des passage(s) à travers l'élément d'amplification.

Le faisceau laser à amplifier 300, émis par la source laser 781, polarisé p, traverse une lame séparatrice de polarisation 791 inclinée à l'incidence qui convient, généralement 55 à 60 degrés, relativement au faisceau laser incident.

Cette lame séparatrice de polarisation 791 transmet la polarisation p et réfléchit la polarisation s.

Le faisceau laser à amplifier se dirige ensuite vers le dispositif d'amplification laser 700, selon une incidence normale à la face d'entrée 711 de la plaque amplificatrice.

Il passe au travers d'une ouverture pratiquée dans un premier miroir dit en toit, constitué d'un couple de réflecteurs 792₁, 792₂ agencés à 90° l'un de l'autre, et inclinés chacun à 45° (à +/- 2° près) relativement à la face d'entrée de l'élément d'amplification.

De l'autre côté de la plaque amplificatrice se trouve un second miroir en toit, constitué d'un autre couple de réflecteurs 793₁, 793₂.

Chacun des réflecteurs 792₁, 792₂, 793₁, 793₂ présente sa face réfléchissante du côté de la plaque amplificatrice.

De préférence, chacun des réflecteurs 792₁, 792₂, 793₁, 793₂ est incliné à 45° exactement relativement aux faces d'entrée et de sortie de l'élément d'amplification, pour garantir une incidence normale du faisceau laser à amplifier, à chaque passage dans l'élément d'amplification.

Ces quatre réflecteurs sont configurés ensemble pour que le faisceau laser à amplifier traverse plusieurs fois l'élément d'amplification, en se propageant directement entre la face d'entrée et la face de sortie de l'élément d'amplification.

Ainsi, le faisceau laser à amplifier traverse plusieurs fois l'élément d'amplification de part en part, en se décalant selon l'axe (y) entre deux traversées, par réflexions successives sur les réflecteurs 792₁, 792₂, 793₁, 793₂.

Dans l'exemple représenté en figure 7, il traverse 4 fois l'élément d'amplification.

Les réflecteurs 792₁, 792₂, 793₁, 793₂ sont agencés de sorte qu'à chacune de ces traversées, le faisceau laser à amplifier s'étende à l'intérieur de l'élément d'amplification selon un volume distinct. De préférence, ces différents volumes ne sont pas superposés, mais juxtaposés, et occupent ensemble l'ensemble du volume de l'élément d'amplification.

Le faisceau de pompe s'étend avantageusement sur l'ensemble du volume de la plaque amplificatrice.

Après ces plusieurs traversées de l'élément d'amplification, le faisceau laser traverse une lame quart d'onde 794, puis est réfléchi sur un réflecteur 795.

Le réflecteur 795 est agencé orthogonal au faisceau laser incident, de sorte qu'il renvoie ce faisceau laser sur le même chemin optique.

Grâce à la lame quart d'onde 794, le faisceau laser retournant vers l'élément d'amplification présente une polarisation tournée de 90°, soit une polarisation s.

Le réflecteur 795 et la lame quart d'onde 794 sont configurés ensemble pour que le faisceau laser à amplifier traverse plusieurs fois l'élément d'amplification en présentant une première polarisation, puis en présentant une seconde polarisation.

Le faisceau laser à amplifier effectue ainsi 4 nouvelles traversées de l'élément d'amplification, cette fois avec la polarisation s.

En sortie, il forme le faisceau laser dit amplifié, qui se propage jusqu'à la lame séparatrice de polarisation 791, sur laquelle il est réfléchi.

Le faisceau laser à amplifier est ainsi amplifié selon 8 passages successifs à travers l'élément d'amplification.

La lame séparatrice de polarisation 791, les réflecteurs 792₁, 792₂, 793₁, 793₂, la lame quart d'onde 794 et le réflecteur 795 forment ensemble des moyens de multiplication de passages dans l'élément d'amplification.

Sur la figure 7, on n'a pas représenté les moyens d'émission du faisceau laser de pompage.

Ces moyens d'émission sont configurés ici de sorte que le faisceau laser de pompage se propage selon l'axe (Oy), orthogonal à la direction de propagation du faisceau laser à amplifier.

Ces moyens d'émission sont configurés en outre de sorte que la puissance de pompe soit répartie de façon sensiblement homogène, et de préférence dans tout le volume de la plaque amplificatrice.

L'invention n'est pas limitée aux différents exemples décrits ci-avant, et de nombreuses variantes peuvent être mises en œuvre sans sortir du cadre de la présente invention, notamment d'autres géométries pour les électrodes chauffantes.

Par exemple, chaque élément de chauffage peut être constitué d'une pluralité d'électrodes pouvant être chacune allumée ou éteinte indépendamment des autres, pour ajuster de façon dynamique la forme émettant de la chaleur, en fonctionnement.

On peut également réaliser un système d'amplification dans lequel les barres d'extrémité sont plus épaisses que la plaque amplificatrice, et dépassent relativement à celle-ci, selon l'axe (x).

Lorsque les faces supérieures, respectivement inférieures, des barres d'extrémité et de la plaque amplificatrice ne sont pas coplanaires, les éléments de chauffage peuvent s'étendre jusqu'au-dessus ou en-dessous de la plaque amplificatrice, et présenter alors des décrochements au niveau des interfaces entre une barre d'extrémité et la plaque amplificatrice.

## Revendications

1. Dispositif (200; 500; 600; 700) d'amplification laser, qui comprend :
- un élément d'amplification (210, 310, 610), constitué d'une plaque amplificatrice dopée (213 ; 313) et de deux barres d'extrémité non dopées (2141, 2142 ; 3141, 3142), les barres d'extrémité encadrant latéralement la plaque amplificatrice, et chaque barre d'extrémité présentant une face, située du côté opposé à la plaque amplificatrice, qui forme une face d'entrée (611 ; 711), respectivement une face de sortie (212 ; 612 ; 712) de l'élément d'amplification pour un faisceau laser à amplifier (300) ; et
- deux systèmes de contrôle de la température (230A, 230B ; 630A, 630B), recouvrant respectivement une face supérieure et une face inférieure de l'élément d'amplification, la face supérieure, respectivement inférieure, de l'élément d'amplification étant constituée par les faces supérieures, respectivement inférieures, de la plaque amplificatrice et des deux barres d'extrémité, où
- chaque système de contrôle de la température (230A ; 230B ; 630A; 630B) comprend un élément de refroidissement (231A ; 231B ; 431₁ ; 431₂ ; 431₃ ; 431₄ ; 431₅ ; 531A), recouvrant une région centrale de la face supérieure, respectivement inférieure de l'élément d'amplification,
**caractérisé en ce que**
- chaque système de contrôle de la température comprend en outre
au moins un élément de chauffage (232A ; 232B ; 432₁ ; 432₂ ; 432₃ ; 432₄ ; 432₅ ; 532B), recouvrant des régions périphériques de la face supérieure, respectivement inférieure de l'élément d'amplification ; et
- les systèmes de contrôle de la température (230A ; 230B ; 630A ; 630B) sont sensiblement symétriques l'un de l'autre, selon une symétrie orthogonale par rapport à un plan ( 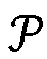 ), ledit plan ( 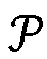 ) étant un plan parallèle aux faces supérieure et inférieure de la plaque amplificatrice (213 ; 313) et passant par ladite plaque, et chaque système de contrôle de la température présentant un taux de recouvrement supérieur à 90% avec le symétrique de l'autre système de contrôle de la température.

2. Dispositif (200 ; 500 ; 600 ; 700) selon la revendication 1, **caractérisé en ce que** les barres d'extrémité sont constituées chacune du même matériau que la plaque amplificatrice, excepté que ce matériau est non dopé dans les barres d'extrémité.

3. Dispositif (200 ; 500 ; 600 ; 700) selon la revendication 1 ou 2, **caractérisé en ce que** chaque système de contrôle de la température (230A, 230B ; 630A, 630B) est sensiblement invariant par une rotation de 180° autour d'un axe (Δ) orthogonal à la face supérieure de la plaque amplificatrice (213 ; 313), chaque système de contrôle de la température présentant un taux de recouvrement supérieur à 90% avec ce même système de contrôle de la température tourné de 180° autour de cet axe.

4. Dispositif (200 ; 500 ; 600 ; 700) selon l'une quelconque des revendications 1 à 3, **caractérisé en ce que** l'épaisseur (E) de la plaque amplificatrice (213 ; 313) et des deux barres d'extrémité est supérieure ou égale à 3 mm.

5. Dispositif selon l'une quelconque des revendications 1 à 4, **caractérisé en ce que** dans chaque système de contrôle de la température, l'au moins un élément de chauffage (432₂; 432₃; 432₄; 432₅) présente des faces orthogonales aux faces supérieure et inférieure de la plaque amplificatrice, situées au regard de l'élément de refroidissement (431₂ ; 431₃; 431₄ ; 431₅), et de forme arrondie.

6. Dispositif selon l'une quelconque des revendications 1 à 5, **caractérisé en ce que** dans chaque système de contrôle de la température, l'au moins un élément de chauffage (432₄ ; 432₅) entoure entièrement l'élément de refroidissement (431₄ ; 431₅).

7. Dispositif selon l'une quelconque des revendications 1 à 6, **caractérisé en ce que** dans chaque système de contrôle de la température, l'élément de chauffage (431₃ ; 431s) présente une section non rectangulaire, dans un plan parallèle à la face supérieure de la plaque amplificatrice.

8. Dispositif (600) selon l'une quelconque des revendications 1 à 7, **caractérisé en ce qu'**il comprend en outre au moins une lentille externe (660) qui s'étend en entrée, respectivement en sortie de l'élément d'amplification.

9. Dispositif (200 ; 500 ; 600 ; 700) selon l'une quelconque des revendications 1 à 8, **caractérisé en ce que** la face supérieure, respectivement inférieure de l'élément d'amplification, est recouverte directement par une couche (220A ; 220B) dite bas indice, d'indice optique inférieur à l'indice optique moyen de la plaque amplificatrice, chaque couche bas indice étant recouverte directement par le système de contrôle de la température correspondant.

10. Dispositif (500) selon l'une quelconque des revendications 1 à 9, **caractérisé en ce que** dans chaque système de contrôle de la température, l'au moins un élément de chauffage (532A) est alimenté par des moyens d'alimentation réglables (555), et **en ce que** les moyens d'alimentation réglables sont reliés à des moyens de pilotage (554), configurés pour formuler une consigne de pilotage en fonction du résultat d'une comparaison entre une consigne de déformation maximale de surface d'onde, et une mesure de surface d'onde sur un faisceau laser dit amplifié en sortie de l'élément d'amplification.

11. Dispositif (500) selon l'une quelconque des revendications 1 à 10, **caractérisé en ce qu'**il comprend en outre des moyens de repérage relativement à l'élément d'amplification, configurés pour guider le positionnement du faisceau laser à amplifier (300) de sorte qu'il se propage en ligne droite dans l'élément d'amplification.

12. Système (7000) comprenant un dispositif (700) selon l'une quelconque des revendications 1 à 11, **caractérisé en ce qu'**il comprend en outre des moyens de multiplication de passages, configurés pour multiplier un nombre de passages du faisceau laser à amplifier, dans l'élément d'amplification.

13. Système (7000) selon la revendication 12, **caractérisé en ce que** les moyens de multiplication de passages comprennent deux réflecteurs (792₁, 792₂) disposés du côté de la face latérale d'entrée de l'élément d'amplification, et deux réflecteurs (793₁, 793₂) disposés du côté de la face latérale de sortie de l'élément d'amplification.

14. Système (7000) selon la revendication 13, **caractérisé en ce que** les moyens de multiplication de passages comprennent également une lame quart d'onde (794) et un réflecteur (795), configurés pour doubler un nombre de passages du faisceau laser à amplifier dans l'élément d'amplification.

## Patentansprüche

1. Laser-Verstärkungsvorrichtung (200; 500; 600; 700), enthaltend:
- ein Verstärkungselement (210, 310, 610), bestehend aus einer dotierten Verstärkungsplatte (213; 313) und zwei undotierten Endstäben (2141, 2142; 3141, 3142), wobei die Endstäbe die Verstärkungsplatte seitlich umrahmen und jeder Endstab eine Fläche aufweist, die auf der der Verstärkungsplatte gegenüberliegenden Seite angeordnet ist und eine Eintrittsfläche (611; 711) bzw. eine Austrittsfläche (212; 612; 712) des Verstärkungselements für einen zu verstärkenden Laserstrahl (300) bildet; und
- zwei Temperaturregelsysteme (230A, 230B; 630A, 630B), die jeweils eine obere und eine untere Fläche des Verstärkungselements abdecken, wobei die obere bzw. untere Fläche des Verstärkungselements aus den oberen bzw. unteren Flächen der Verstärkungsplatte und der beiden Endstäbe besteht, wobei
- jedes Temperaturregelsystem (230A; 230B; 630A; 630B) ein Kühlelement (231A; 231B; 431₁; 431₂; 431₃; 431₄; 431₅; 531A) enthält, das einen Mittelbereich der oberen bzw. unteren Fläche des Verstärkungselements abdeckt,
**dadurch gekennzeichnet, dass**
- jedes Temperaturregelsystem ferner enthält:
- zumindest ein Heizelement (232A; 232B; 432₁; 432₂; 432₃; 432₄; 432s; 532B), das die Umfangsbereiche der oberen bzw. unteren Fläche des Verstärkungselements abdeckt; und
- die Temperaturregelsysteme (230A; 230B; 630A; 630) im Wesentlichen symmetrisch zueinander in orthogonaler Symmetrie in Bezug auf eine Ebene ( 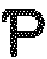 ) sind, wobei die Ebene ( 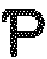 ) eine Ebene ist, die sich parallel zu der oberen und unteren Fläche der Verstärkungsplatte (213; 313) erstreckt und durch die Platte verläuft, und jedes Temperaturregelsystem eine Abdeckungsrate von mehr als 90% mit der Symmetrie des anderen Temperaturregelsystems aufweist.

2. Vorrichtung (200; 500; 600; 700) nach Anspruch 1,
**dadurch gekennzeichnet, dass**
die Endstäbe jeweils aus dem gleichen Material wie die Verstärkungsplatte bestehen, außer dass dieses Material in den Endstäben undotiert ist.

3. Vorrichtung (200; 500; 600; 700) nach Anspruch 1 oder 2,
**dadurch gekennzeichnet, dass**
jedes Temperaturregelsystem (230A, 230B; 630A, 630B) im Wesentlichen unveränderlich bei Drehung um 180° um eine Achse (Δ) orthogonal zur oberen Fläche der Verstärkungsplatte (213; 313) ist, wobei jedes Temperaturregelsystem eine Abdeckungsrate von mehr als 90% mit diesem gleichen um 180° um diese Achse gedrehten Temperaturregelsystem aufweist.

4. Vorrichtung (200; 500; 600; 700) nach einem der Ansprüche 1 bis 3, **dadurch gekennzeichnet, dass**
die Dicke (E) der Verstärkungsplatte (213; 313) und der beiden Endstäbe höher oder gleich 3 mm ist.

5. Vorrichtung nach einem der Ansprüche 1 bis 4,
**dadurch gekennzeichnet, dass**
bei jedem Temperaturregelsystem das zumindest eine Heizelement (432₂; 432₃; 432₄; 432₅) orthogonal zu der oberen und der unteren Fläche der Verstärkungsplatte verlaufende Flächen aufweist, die dem Kühlelement (431₂; 431₃; 431₄; 431₅) gegenüberliegen und eine abgerundete Form haben.

6. Vorrichtung nach einem der Ansprüche 1 bis 5,
**dadurch gekennzeichnet, dass**
bei jedem Temperaturregelsystem das zumindest eine Heizelement (432₄; 432₅) das Kühlelement (431₄; 431₅) vollständig umgibt.

7. Vorrichtung nach einem der Ansprüche 1 bis 6,
**dadurch gekennzeichnet, dass**
bei jedem Temperaturregelsystem das Heizelement (431₃; 431₅) in einer Ebene parallel zur oberen Fläche der Verstärkungsplatte einen nicht rechteckigen Querschnitt aufweist.

8. Vorrichtung (600) nach einem der Ansprüche 1 bis 7,
**dadurch gekennzeichnet, dass**
sie ferner zumindest eine äußere Linse (660) enthält, die sich am Eintritt bzw. am Austritt des Verstärkungselements erstreckt.

9. Vorrichtung (200; 500; 600; 700) nach einem der Ansprüche 1 bis 8,
**dadurch gekennzeichnet, dass** die obere bzw. untere Fläche des Verstärkungselements direkt von einer sogenannten Low-Index-Schicht (220A; 220B) mit einem optischen Index, der niedriger ist als der durchschnittliche optische Index der Verstärkungsplatte, abgedeckt wird, wobei jede Low-Index-Schicht direkt von dem entsprechenden Temperaturregelsystem abgedeckt wird.

10. Vorrichtung (500) nach einem der Ansprüche 1 bis 9,
**dadurch gekennzeichnet, dass**
bei jedem Temperaturregelsystem das zumindest eine Heizelement (532A) über einstellbare Versorgungsmittel (555) versorgt wird, und dass die einstellbaren Versorgungsmittel mit Steuermitteln (554) verbunden sind, die dazu ausgelegt sind, um eine Steuervorgabe in Abhängigkeit von dem Ergebnis eines Vergleichs zwischen einer Vorgabe maximaler Verformung der Wellenoberfläche und einer Wellenoberflächenmessung an einem Laserstrahl, der am Austritt des Verstärkungselements verstärkt wird, zu formulieren.

11. Vorrichtung (500) nach einem der Ansprüche 1 bis 10,
**dadurch gekennzeichnet, dass**
sie ferner Mittel zum Lokalisieren des Verstärkungselements enthält, die dazu ausgelegt sind, um die Positionierung des zu verstärkenden Laserstrahls (300) so zu führen, dass er sich in einer geraden Linie im Verstärkungselement ausbreitet.

12. System (7000), enthaltend eine Vorrichtung (700) nach einem der Ansprüche 1 bis 11,
**dadurch gekennzeichnet, dass**
es ferner Mittel zur Durchgangsvervielfachung enthält, die dazu ausgelegt sind, um eine Anzahl von Durchgängen des zu verstärkenden Laserstrahls in dem Verstärkungselement zu vervielfachen.

13. System (7000) nach Anspruch 12,
**dadurch gekennzeichnet, dass**
die Mittel zur Durchgangsvervielfältigung zwei Reflektoren (792₁, 792₂) enthalten, die auf der Seite der Eintrittsseitenfläche des Verstärkungselements angeordnet sind, sowie zwei Reflektoren (793₁, 793₂), die auf der Seite der Austrittsseitenfläche des Verstärkungselements angeordnet sind.

14. System (7000) nach Anspruch 13,
**dadurch gekennzeichnet, dass**
die Mittel zur Durchgangsvervielfältigung auch eine Viertelwellenplatte (794) und einen Reflektor (795) enthalten, die dazu ausgelegt sind, um eine Anzahl von Durchgängen des zu verstärkenden Laserstrahls im Verstärkungselement zu verdoppeln.

## Claims

1. A laser amplification device (200; 500; 600; 700), which comprises:
- an amplification element (210, 310, 610), consisting of a doped amplifying plate (213; 313) and two non-doped end bars (2141, 2142; 3141, 3142), the end bars laterally surrounding the amplifying plate, and each end bar having a face, located on the side opposite to the amplifying plate, which forms an inlet face (611; 711), respectively an outlet face (212; 612; 712) of the amplification element for a laser beam to be amplified (300); and
- two temperature control systems (230A, 230B; 630A, 630B), respectively covering an upper face and a lower face of the amplification element, the upper, respectively lower, face of the amplification element consisting of the upper faces, respectively lower faces, of the amplifying plate and of the two end bars, where
- each temperature control system (230A, 230B; 630A, 630B) comprises a cooling element (231A; 231B; 431₁; 431₂; 431₃; 431₄; 431₅; 531A), covering a centre region of the upper, respectively lower, face of the amplification element,
**characterised in that**
- each temperature control system further comprises
at least one heating element (232A; 232B; 432₁; 432₂; 432₃; 432₄; 432₅; 532B), covering peripheral regions of the upper, respectively lower, face of the amplification element; and
- the temperature control systems (230A; 230B; 630A; 630B) are substantially symmetrical to each other, according to an orthogonal symmetry with respect to a plane (P), said plane (P) being a plane parallel to the upper and lower faces of the amplifying plate (213; 313) and passing through said plate, and each temperature control system having a recovery rate higher than 90% with the symmetrical part of the other temperature control system.

2. The device (200; 500; 600; 700) according to claim 1, **characterised in that** the end bars each consist of the same material as the amplifying plate, except that this material is non-doped in the end bars.

3. The device (200; 500; 600; 700) according to claim 1 or 2, **characterised in that** each temperature control system (230A, 230B; 630A, 630B) is substantially invariant by a rotation of 180° about an axis (Δ) orthogonal to the upper face of the amplifying plate (213; 313), each temperature control system having a recovery rate higher than 90% with this same temperature control system rotated by 180° about this axis.

4. The device (200; 500; 600; 700) according to any of claims 1 to 3, **characterised in that** the thickness (E) of the amplifying plate (213; 313) and of both end bars is higher than or equal to 3mm.

5. The device according to any of claims 1 to 4, **characterised in that** in each temperature control system, the at least one heating element (432₂; 432₃; 432₄; 432₅) has faces orthogonal to the upper and lower faces of the amplifying plate, located facing the cooling element (431₂; 431₃; 431₄; 431₅), and with a rounded shape.

6. The device according to any of claims 1 to 5, **characterised in that** in each temperature control system, the at least one heating element (432₄; 432₅) fully surrounds the cooling element (431₄; 431s).

7. The device according to any of claims 1 to 6, **characterised in that** in each temperature control system, the heating element (431₃; 431₅) has a non-rectangular cross-section, in a plane parallel to the upper face of the amplifying plate.

8. The device (600) according to any of claims 1 to 7, **characterised in that** it further comprises at least one outer lens (660) which extends at the inlet, respectively the outlet, of the amplification element.

9. The device (200; 500; 600; 700) according to any of claims 1 to 8, **characterised in that** the upper, respectively lower, face of the amplification element is directly covered by a so-called low index layer (220A; 220B), with an optical index lower than the average optical index of the amplifying plate, each low index layer being directly covered by the corresponding temperature control system.

10. The device (500) according to any of claims 1 to 9, **characterised in that** in each temperature control system, the at least one heating element (532A) is powered by adjustable power means (555), and **in that** the adjustable power means are connected to driving means (554), configured to issue a driving set point as a function of the result of a comparison between a wave surface maximum deformation set point, and a wave surface measurement on a so-called amplified laser beam at the outlet of the amplification element.

11. The device (500) according to any of claims 1 to 10, **characterised in that** it further comprises locating means for locating relative to the amplification element, configured to guide the positioning of the laser beam to be amplified (300) such that it propagates in a straight line in the amplification element.

12. A system (7000) comprising a device (700) according to any of claims 1 to 11, **characterised in that** it further comprises passage multiplication means, configured to multiply a number of passages of the laser beam to be amplified, in the amplification element.

13. The system (7000) according to claim 12, **characterised in that** the passage multiplication means comprise two reflectors (792₁, 792₂) disposed on the side of the inlet side face of the amplification element, and two reflectors (793₁, 793₂) disposed on the side of the outlet side face of the amplification element.

14. The system (7000) according to claim 13, **characterised in that** the passage multiplication means also comprise a quarter wave plate (794) and a reflector (795), configured to double a number of passages of the laser beam to be amplified in the amplification element.
